# EUROPEAN PATENT APPLICATION

(11) **EP 4 389 324 A1**
(43) Date of publication of application: **26.06.2024**
(21) Application number: 23215364.3
(22) Date of filing: 08.12.2023
(51) Int. Cl.: B22F 10/31, B22F 10/39, B22F 10/62, B22F 10/66, B22F 12/30, B22F 12/33, B22F 12/37, B22F 12/86, B29C 64/176, B29C 64/182, B29C 64/188, B29C 64/245, B33Y 10/00, B33Y 40/20, B22F 10/28, B29C 64/153, B33Y 30/00

(54) **A METHOD OF MANUFACTURING AN OBJECT**

(30) Priority: 20.12.2022 US 202218085022
(71) Applicant: ROSEMOUNT AEROSPACE INC., Burnsville, MN 55306-4898 (US)
(72) Inventor: LOPAC, Mark S., Cokato, MN (US); FEIST, Dale, Glencoe, MN (US)
(74) Representative: Dehns

(57) **Abstract**

A method of making an object (42) includes partially additively manufacturing the object (42) onto a removable platen (40) using an additive manufacturing system, removing the platen (40) with the object (42) from a base (38) of the additive manufacturing system, processing the object (42) on the platen (40), inserting the platen (40) with the object (42) that has been processed into the additive manufacturing system or a different system, mating the platen (40) with the object (42) that has been processed to the base (38) of the additive manufacturing system or a base (38) of the different system using a registration feature, and manufacturing a layer onto the object (42) that has been processed.

## Description

### BACKGROUND

The present disclosure relates generally to additive manufacturing, and in particular, to additive manufacturing methods.

Additive manufacturing processes manufacture objects in a layer-by-layer fashion. Additive manufacturing processes work by first using a computer program to break an object into layers. Next, a layer of powder material can be deposited onto a workstation. A first layer of the object can then be solidified using an additive manufacturing process, including but not limited to, stereolithography, electron beam melting, or laser powder deposition. This process can be repeated, and the object will be built layer-by-layer until it is completed. The object must remain on the workstation during the entire manufacturing process.

### SUMMARY

A method of making an object includes partially additively manufacturing the object onto a removable platen using an additive manufacturing system, removing the platen with the object from a base of the additive manufacturing system, processing the object on the platen, inserting the platen with the object that has been processed into the additive manufacturing system or a different system, mating the platen with the object that has been processed to the base of the additive manufacturing system or a base of the different system using a registration feature, and manufacturing a layer onto the object that has been processed.

A method of making an object includes partially additively manufacturing the object onto a removable platen using an additive manufacturing system, removing the platen with the object from a base of the additive manufacturing system, inserting the platen with the object into a different system, mating the platen with the object to the base of the different system using a registration feature, and manufacturing a layer onto the object.

### BRIEF DESCRIPTION OF THE DRAWINGS

FIG. 1 is a cross-sectional perspective schematic view of an additive manufacturing system.
FIG. 2 is a flow chart illustrating steps for making an object.
FIG. 3A is a schematic view of a registration feature including round pins and round holes.
FIG. 3B is a schematic view of a second embodiment of a registration feature including round pins and round holes.
FIG. 3C is a schematic view of a registration feature including pins and holes having a diamond shape.
FIG. 4 is a schematic view of a registration feature including pins on a roller drum and holes on a continuous platen.
FIG. 5 is a schematic top view of a registration feature including notches in a round platen.

### DETAILED DESCRIPTION

In general, the present disclosure describes an additive manufacturing method that utilizes a registration feature to mate a platen to a base of the additive manufacturing system. As a result, partial additive manufacturing of an object onto the platen can take place, the platen with the object can be removed from the base, the object on the platen can be processed, and the platen with the processed object can be reengaged with the base for additive manufacturing to resume on the processed object. Thus, objects can be made using multiple manufacturing techniques, are transferable between machines and facilities during manufacturing, and can be repaired if manufacturing mistakes occur, increasing efficiency and cost-effectiveness and reducing production waste.

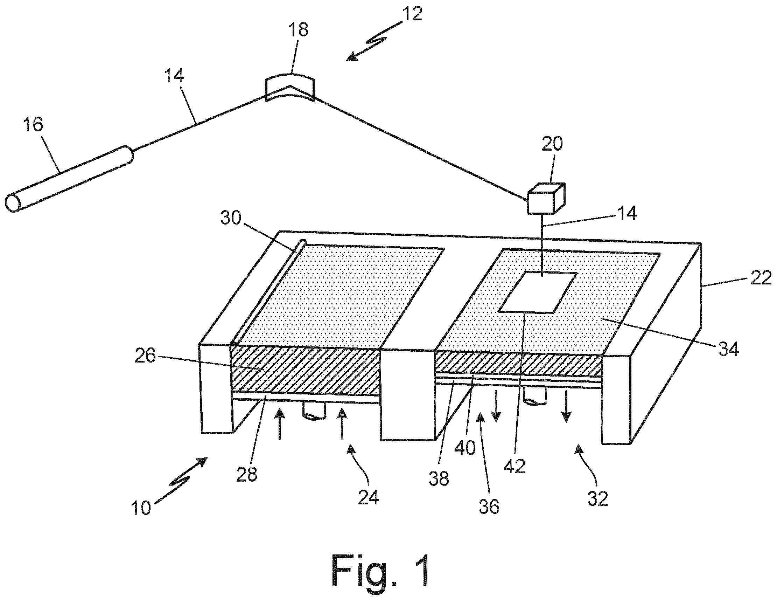

FIG. 1 is a cross-sectional perspective schematic view of additive manufacturing system 10. Additive manufacturing system 10 includes optical system 12 (which includes radiation beam 14, radiation source 16, mirror 18, and movable optical head 20), frame 22, material supply system 24 (which includes sinterable material 26 and supply platform 28), spreader 30, and build station 32 (which includes working layer 34 and build platform 36). Build platform 36 includes base 38 and platen 40. Also seen in FIG. 1 is object 42.

Additive manufacturing system 10 of FIG. 1 is a direct metal laser sintering apparatus. Additive manufacturing system 10 is one of a variety of suitable additive manufacturing devices. Additive manufacturing system 10 builds objects in a layer-by-layer fashion, such that finished objects made by additive manufacturing system 10 may be monolithic. Additive manufacturing system 10 may be used to build a variety of components as a single solid piece which would otherwise require construction in multiple parts using traditional manufacturing processes or have discontinuities or sharp edges due to welding of joints or other traditional manufacturing processes.

Optical system 12 includes radiation beam 14, radiation source 16, mirror 18, and movable optical head 20. Radiation beam 14 is a laser beam. Radiation beam 14 emanates from radiation source 16 and travels towards mirror 18. Mirror 18 reflects radiation beam 14 towards movable optical head 20. Movable optical head 20 reflects radiation beam 14 towards a desired target.

Frame 22 provides physical support for other components that make up additive manufacturing system 10. Frame 22 may be, for example, a solid metal structure defining interior voids to contain other components of additive manufacturing system 10.

Material supply system 24 is a system for delivering material used in additive manufacturing. As shown in FIG. 1, material supply system 24 includes sinterable material 26 and supply platform 28. Sinterable material 26 may be, for example, a powdered metal that is at least partially sinterable to form a solid part. Supply platform 28 is a platform that may be raised or lowered with respect to frame 22 in order to facilitate the supply of sinterable material 26. Spreader 30 is used to transfer sinterable material 26 from material supply system 24 to a desired location for additive manufacturing. Spreader 30 can transfer sinterable material 26 to a desired location by rolling sinterable material 26 across a desired location.

Build station 32 includes working layer 34 and build platform 36. Working layer 34 consists of a surface layer of sinterable material that is positioned to be sintered by radiation beam 14. Build platform 36 is a platform that is movable with respect to frame 22 in order to facilitate layer-by-layer construction of components by additive manufacturing system 10. Build platform 36 consists of base 38 and platen 40. Base 38 is connected to frame 22. Platen 40 can be positioned on base 38. Platen 40 is removable from base 38 and the rest of additive manufacturing system 10. Object 42 is a partially built object, as it is being made by additive manufacturing system 10 on platen 40 of build platform 36. Object 42 is built by additive manufacturing system 10 as a single component. As such, object 42 is a multilayer object. Object 42 can be any object.

Radiation beam 14 is directed towards working layer 34 by optical system 12. Radiation source 16 generates radiation beam 14, which is deflected by mirror 18 and movable optical head 20 to selectively heat portions of working layer 34. By moving mirror 18 and movable optical head 20, a desired pattern of sintered material may be generated in working layer 34. Typically, a slice or layer of a three-dimensional part is made in working layer 34.

Once the layer is complete, material supply system 24 provides additional sinterable material 26 to build station 32. In particular, sinterable material 26 is positioned above a surface of frame 22 when supply platform 28 is raised. Spreader 30 transfers sinterable material 26 across the surface of frame 22 towards build station 32. Meanwhile, build station 32 prepares to receive sinterable material 26 by lowering build platform 36 by a distance proportional to the amount supply platform 28 was raised. Sinterable material 26 displaces the gap left when build platform 36 was lowered, which results in a new working layer 34 of sinterable material 26 that has not yet been sintered.

By repeating this process multiple times, objects 42 may be generated in a layer-by-layer manner. This process is only one potential additive manufacturing method for manufacturing object 42. In other embodiments, there may be powder or liquid sinterable material 26. Additive manufacturing system 10 may alternatively employ stereolithography, electron beam melting, or laser powder deposition, among other forms of additive manufacturing that are known in the field.

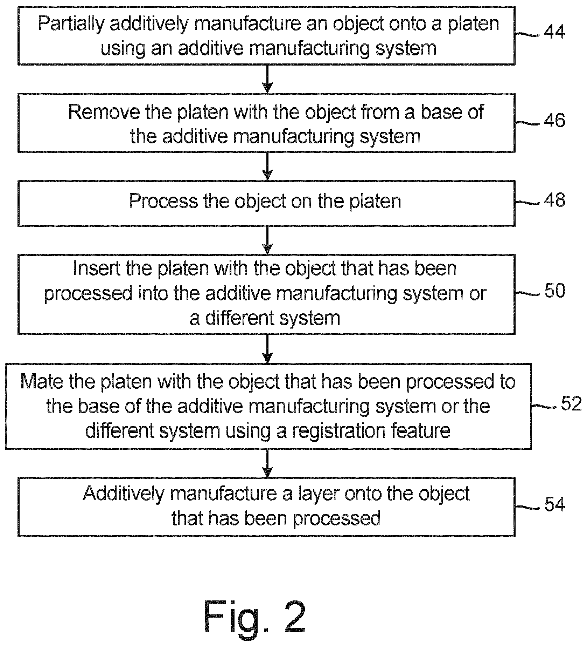

FIG. 2 is a flow chart illustrating steps 44-54 for making object 42. Steps 44-52 include additive manufacturing system 10, base 38, platen 40, and object 42. Steps 44-52 can all take place at the same location or can occur at different locations or facilities.

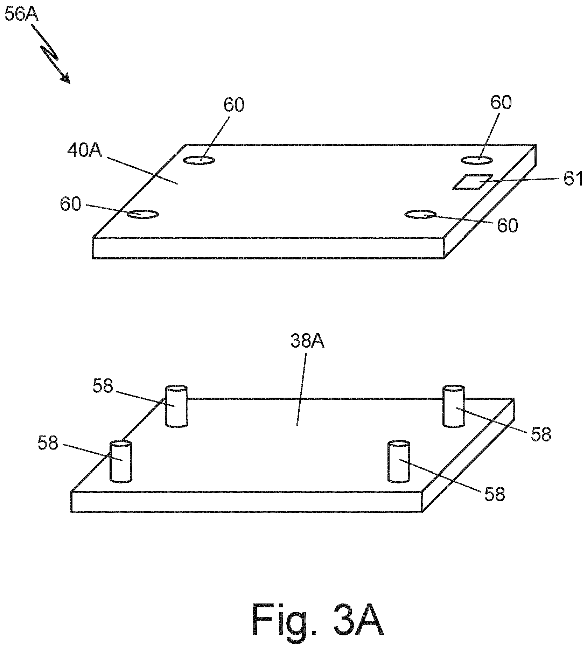

Step 44 includes partially additively manufacturing object 42 onto platen 40 using additive manufacturing system 10. Platen 40 mates to base 38 of additive manufacturing system 10 using a registration feature, which is described further with respect to FIGS. 3A, 3B, 3C, 4, and 5, prior to beginning additive manufacturing. The registration feature enables mating between platen 40 and base 38 in a specific orientation. The registration feature includes a feature on base 38 that mates with a feature on platen 40 only when platen 40 is in a particular position with respect to base 38.

Additive manufacturing system 10 begins additively manufacturing object 42 at an identified point of origin on platen 40, which is a specific x-y-z coordinate with reference to the registration feature or another type of reference on platen 40, such as a bar code, a laser etching, a photo etching, or a printed identifier. Object 42 is bonded to platen 40 when additively manufactured onto platen 40 such that object 42 sticks to platen 40. Processing, such as electrical discharge machining (EDM), is required to remove object 42 from platen 40. As such, object 42 stays in place on platen 40 throughout the entire manufacturing process.

Step 46 includes removing platen 40 with object 42 from base 38 of additive manufacturing system 10. Platen 40 is disengaged from base 38, which requires disengaging the registration feature. As object 42 sticks to platen 40, object 42 is removed along with platen 40 from additive manufacturing system 10.

Step 48 includes processing object 42 on platen 40. Processing object 42 may include additively manufacturing object 42 within a different additive manufacturing system, grinding object 42, machining object 42, laser etching object 42, chemically etching object 42, or performing any other suitable processing to object 42. Because object 42 is bonded to platen 40, object 42 stays in place during processing.

Processing of object 42 may be required during the additive manufacturing process, prior to the completion of manufacturing object 42. For example, if an additive manufacturing mistake is made to object 42 within additive manufacturing system 10, such as damaging a layer of object 42, object 42 can be machined down until the layer or layers with the mistake is/are removed from object 42. As another example, during the manufacturing process, object 42 may require use of a different additive manufacturing machine or require processing at another location.

Step 50 includes inserting platen 40 with object 42 that has been processed into additive manufacturing system 10 or a different system. The different system can be another additive manufacturing system 10 in the same or a different location or any other suitable system for manufacturing object 42, such as a non-additive manufacturing system. Object 42 can be inserted into additive manufacturing system 10 or a different system based on manufacturing needs of object 42. The different system must include the registration feature for mating to platen 40.

Step 52 includes mating platen 40 with object 42 that has been processed to base 38 of additive manufacturing system 10 or the different system using the registration feature. The registration feature is reengaged, mating platen 40 to base 38 in a specific orientation. A feature on base 38 mates with a feature on platen 40 only when platen 40 is in a particular position with respect to base 38. As such, the registration feature ensures that platen 40 is in the same position with respect to base 38 as it was prior to removing platen 40 from base 38, as described with respect to step 46. Because object 38 sticks to platen 40, object is in the same position with respect to base 38 as object 42 was prior to removing platen 40 from base 38. Thus, object 42 is in the exact position with respect to additive manufacturing system 10 as it was prior to platen 40 being removed from additive manufacturing system 10. The registration feature acts as mechanical way of transferring knowledge of prior processing to additive manufacturing system 10 by transferring position information of object 42, which can include the point of origin, during the build process.

Step 54 includes additively manufacturing a layer onto object 42 that has been processed. Because object 42 is in the same position with respect to additive manufacturing system 10 as object 42 was prior to platen 40 being removed, additive manufacturing can resume on object 42. Additive manufacturing starts the new layer at a known point that is an x-y-z coordinate a known distance, or reference, from the point of origin initially identified. As the point of origin is with reference to platen 40, the point-of-origin is in the same location as it was prior to removing platen 40 with object 42 from additive manufacturing system 10. As such, the point-of-origin provides a reference point on platen 40 for additive manufacturing system 10 to know where to begin again on the new layer of object 42. Additive manufacturing system 10 uses the point that is a known distance from the point of origin to start additively manufacturing the new layer of object 42.

For example, additive manufacturing system 10 can additively manufacture the layer or layers of object 42 that previously contained a manufacturing error and were machined away, as discussed with reference to step 48. Additive manufacturing system 10 can then resume additively manufacturing additional layers on top of the corrected new layers. As a result, the manufacturing process yields less waste and is more cost effective.

Traditionally, objects cannot be repaired if additive manufacturing mistakes occur. Once objects are unattached from current additive manufacturing systems, the build data is lost, including information such as location, chemical composition, layer count, and point of origin. The additive manufacturing system has no way to identify where the object is on the base. As such, the location of the object is lost once removed from a traditional additive manufacturing system. Thus, traditional methods do not include the ability to rework parts or remove and subsequently process parts during the additive manufacturing process. There is no way to guarantee that the next layer would be in the correct position on the object.

Objects 42 that are manufactured using the registration feature can be made using multiple manufacturing techniques, are transferable between machines and facilities during manufacturing, and can be repaired if manufacturing mistakes occur, increasing efficiency and cost-effectiveness and reducing production waste. Traceability is maintained via registration feature 56, allowing for removal of object 42 from additive manufacturing system 10 during the manufacturing process and reinsertion of object 42 back into additive manufacturing system 10 during the manufacturing process. As object 42 is bonded to platen 40 during the manufacturing process, the registration feature ensures that platen 40 and object 42 are in the same position with respect to base 38. As a result, build data is maintained, and additive manufacturing 10 can resume on object 42 after object 42 is removed and processed. Object 42 is in the same position as object 42 was prior to being removed from additive manufacturing system 10. Additive manufacturing system 10 knows where object 42 is on platen, as the registration feature locates the position of object 42 with respect to additive manufacturing system 10. Object 42 is also transferable between different applications and equipment. Object 42 can be moved between machines and locations, and in and out of additive manufacturing system 10 to manufacture additional layers of object 42, due to repeatable placement of object 42. As such, a layer of object 42 can be built via additive manufacturing system 10 and the next layer of object 42 can be built via another additive manufacturing system.

FIG. 3A is a schematic view of registration feature 56A including round pins 58 and round holes 60. Registration feature 56A is an example of the registration feature described above with respect to FIG. 2. Pins 58 are round and connected to base 38A. In this embodiment, base 38A has four pins 58. In alternate embodiments, base 38A may have one pin 58 or any other suitable number of pins 58. Pins 58 are shaped to mate with holes 60 such that pins 58 extend into holes 60.

Holes 60 are round and extend through platen 40A. In alternate embodiments, holes 60 may only extend partially into a bottom surface of platen 40A. The number of holes 60 corresponds to the number of pins 58. In this embodiment, platen 40A includes identifying feature 61. Identifying feature 61 may be a printed or laser-etched code, or any other suitable identifying feature, located on a top surface of platen 40A. In alternate embodiments, platen 40A may not include identifying feature 61.

When platen 40A is positioned on base 38A, pins 58 of base 38A mate with holes 60 of platen 40A such that platen 40A is in a known position with respect to base 38A. When platen 40A is removed from base 38A, platen 40A can be transferred to another location, such as another additive manufacturing machine with the same type of registration feature 56A or another processing machine, and returned to additive manufacturing machine 10 at a known location. Identifying feature 61 acts as a reference that identifies object 42 to additive manufacturing system 10 as a particular component or part. As a result, additive manufacturing system 10 can identify the point of origin or the known point that is a known distance from the point of origin. Thus, additive manufacturing system 10 knows where to start the new layer of object 42 and can resume additive manufacturing.

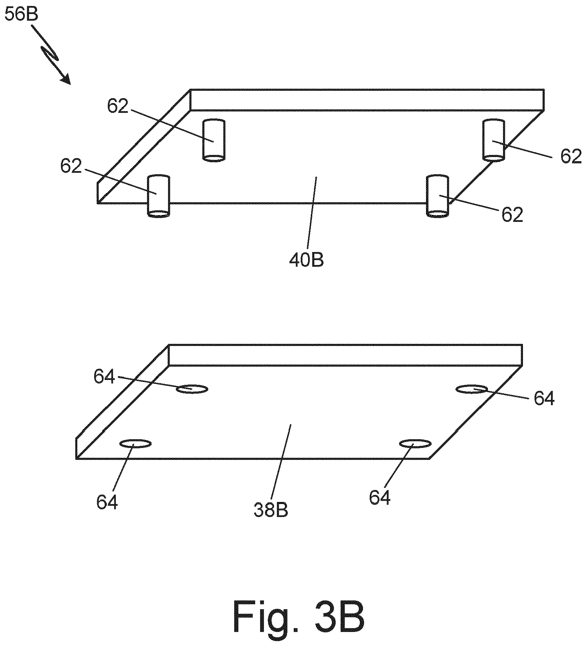

FIG. 3B is a schematic view of registration feature 56B including round pins 62 and round holes 64. Registration feature 56B is an example of the registration feature described above with respect to FIG. 2. Pins 62 are round and connected to platen 40B. In this embodiment, platen 40B has four pins 62. In alternate embodiments, platen 40B may have one pin 62 or any other suitable number of pins 62. Pins 58 are shaped to mate with holes 64 such that pins 62 extend into holes 64. Holes 64 are round and extend through base 38B. In alternate embodiments, holes 64 may only extend partially into a top surface of base 38B. The number of holes 64 corresponds to the number of pins 62.

When platen 40B is positioned on base 38B, pins 62 of platen 40B mate with holes 64 of base 3 8B such that platen 40B is in a known position with respect to base 38B. When platen 40B is removed from base 38B, platen 40B can be transferred to another location, such as another additive manufacturing machine with the same type of registration feature 56B or another processing machine, and returned to additive manufacturing machine 10 at a known location.

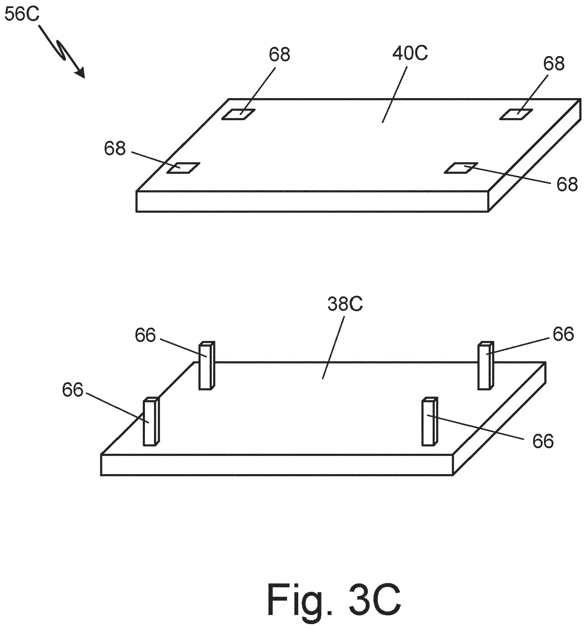

FIG. 3C is a schematic view of registration feature 56C including pins 66 and holes 68 having a diamond shape. Registration feature 56C is an example of the registration feature described above with respect to FIG. 2. Pins 66 are diamond-shaped and connected to base 38C. In this embodiment, base 38C has four pins 66. In alternate embodiments, base 38C may have one pin 66 or any other suitable number of pins 66. In this embodiment, pins 66 are diamond-shaped, having sides connected to each other by corners. In alternate embodiments, pins 66 may be any shape with sides and corners, such as triangular, hexagonal, or any other suitable shape. Pins 66 are shaped to mate with holes 68 such that pins 66 extend into holes 68.

Holes 68 are diamond-shaped and extend through platen 40C. In alternate embodiments, holes 68 may only extend partially into a bottom surface of platen 40C. The number of holes 68 corresponds to the number of pins 66. In this embodiment, holes 68 are diamond-shaped, having sides connected to each other by corners. In alternate embodiments, holes 68 may be any shape with sides and corners to match pins 66, such as triangular, hexagonal, or any other suitable shape.

When platen 40C is positioned on base 38C, pins 66 of base 38C mate with holes 68 of platen 40C such that platen 40C is in a known position with respect to base 38C. When platen 40C is removed from base 38C, platen 40C can be transferred to another location, such as another additive manufacturing machine with the same type of registration feature 56C or another processing machine, and returned to additive manufacturing machine 10 at a known location.

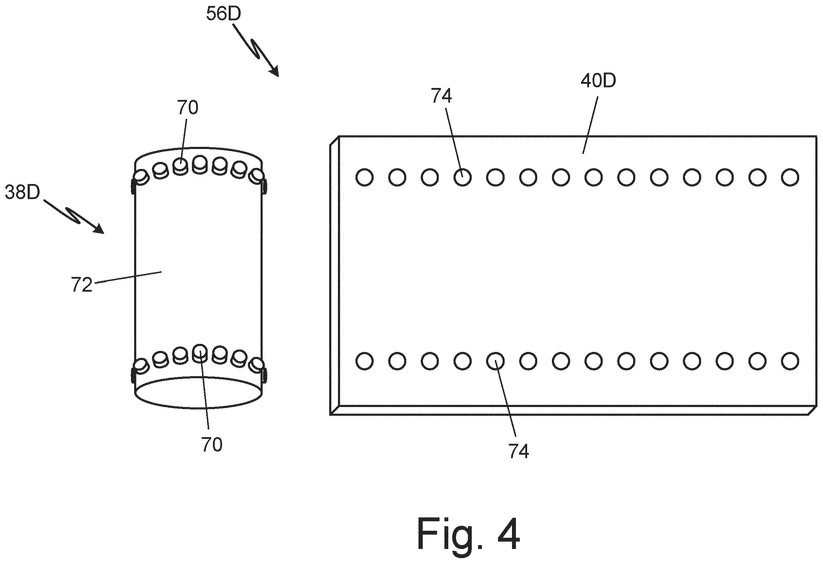

FIG. 4 is a schematic view of registration feature 56D including pins 70 on roller drum 72 and holes 74 on continuous platen 40D. Registration feature 56D is an example of the registration feature described above with respect to FIG. 2. Base 3 8D is roller drum 72, and platen 40D is continuous, or can be of any length.

Pins 70 are round and connected to base 38D, or roller drum 72. Roller drum 72 is cylindrical with a plurality of pins 70 extending along outer edges of roller drum 72. Pins 70 may be equally spaced from each other or spaced at various distances from each other. Pins 70 may be the same size or various sizes that correspond with various-sized holes 74. In this embodiment, pins 70 are round. Pins 70 may also be shaped to have sides connected to each other by corners, such as diamond-shaped, triangular, hexagonal, or any other suitable shape have sides connected to each other by corners. Pins 70 are shaped to mate with holes 74 such that pins 70 extend into holes 74.

Holes 74 are round. Holes 74 may also have sides connected to each other by corners to have a shape that matches pins 70, such as a diamond shape, triangular shape, hexagonal shape, or any other suitable shape. Holes 74 extend along and adjacent edges of platen 40D and are spaced a known distance from each other, the distance corresponding to the space between pins 70. Holes 74 extend through platen 40C at distances that correspond to the placement of pins 70 on roller drum 72. In alternate embodiments, holes 74 may only extend partially into a bottom surface of platen 40C. Platen 40D is continuous, or longer in length, such that it can connect to base 3 8D as roller drum 72 rotates and then move along roller drum 72 as roller drum 72 continues to rotate. As such, continuous platen 40D can continuously move through additive manufacturing system 10.

When platen 40D is positioned on base 38D, pins 70 on roller drum 72 mate with holes 74 in platen 40D such that platen 40D is in a known position with respect to base 3 8D. When platen 40D is removed from base 38D, platen 40D can be transferred to another location, such as another additive manufacturing machine with the same type of registration feature 56D or another processing machine, and returned to additive manufacturing machine 10 at a known location. Because continuous platen 40D can continuously move through additive manufacturing system 10, continuous platen 40D enables the additive manufacture of multiple objects 42 continuously, or of objects 42 with variable length continuously, or of objects 42 having a longer length.

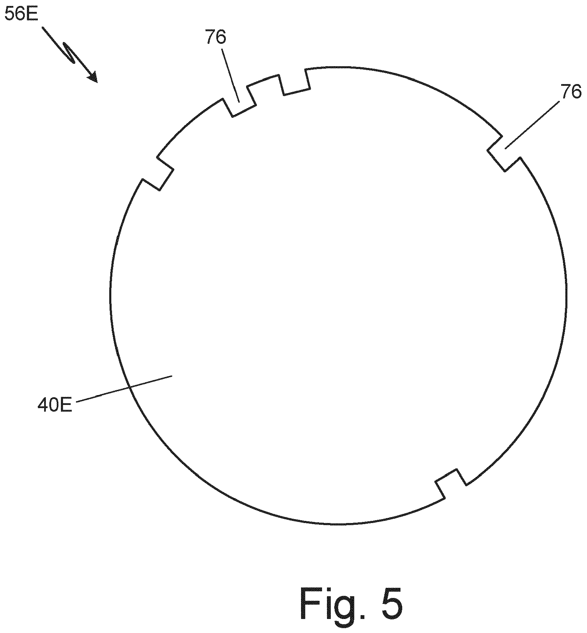

FIG. 5 is a schematic top view of registration feature 56E including notches 76 in round platen 40E. Registration feature 56E is an example of the registration feature described above with respect to FIG. 2. Platen 40E is circular and configured to rotate during additive manufacturing. Platen 40E is shaped to mate with a base, such as base 38 as discussed with respect to FIG. 1, that is also circular and configured to rotate.

Registration feature 56E comprises notches 76 in platen 40E. Notches 76 are positioned in the outer diameter of platen 40E. Notches 76 may be rectangular (as shown in FIG. 5), or notches 76 may be round (as shown with respect to holes 60 in FIG. 3A), diamond-shaped (as shown with respect to holes 68 in FIG. 3C), or any other suitable shape. Notches 76 may be the same size or various sizes that correspond with a base. Notches 76 are shaped to mate with the base. Notches 76 of platen 40E mate with pins or projections or any other suitable feature on the base that is shaped to fit into notches 76. As such, the base is shaped to mate with notches 76 in platen 40E. In the embodiment of FIG. 5, notches 76 are not equally spaced from each other along the outer diameter of platen 40E. Notches 76 are positioned at various distances from each other along the outer diameter of platen 40E. In alternate embodiments, notches 76 may be equally spaced from each other along the outer diameter of platen 40E. The distance of notches 76 along platen 40E corresponds to the placement of a corresponding feature, such as pins or projections, of registration feature 56C on the base. Platen 40E is configured to rotate on the base and can rotate during additive manufacturing. In alternate embodiments, platen 40E could be positioned and rotate next to the base, causing platen 40E to rotate via registration feature 56E. Further, in alternate embodiments, platen 40E may use the center point of round platen 40E as registration feature 56E and may not include notches 76.

When platen 40E is positioned on or adjacent the base, pins or projections on the base mate with notches 76 in platen 40E such that platen 40E is in a known position, a known angle, with respect to the base of additive manufacturing system 10. When platen 40E is removed from the base, platen 40E can be transferred to another location, such as another additive manufacturing machine with the same type of registration feature 56E or another processing machine, and returned back to additive manufacturing machine 10 at a known location.

The methods of making object 42, as discussed above, include registration feature 56, which can be any of registration features 56A, 56B, 56C, 56D, 56E, or any other suitable registration feature that enables the platen to mate with the base at a known location. Features of the registration feature 56, such as pins, holes, and notches as discussed above, can be interchangeably positioned in base 38 or platen 40, including a mixture of shapes, sizes, and types of features of registration feature 56. Registration feature 56 allows platens 40 to mate with bases 38 and, thus, ensure placement of objects 42 during the additive manufacturing processes. Any of platens 40A, 40B, 40C, 40D, and 40E may or may not include identifying feature 61.

### Discussion of Possible Embodiments

The following are non-exclusive descriptions of possible embodiments of the present invention.

A method of making an object, the method comprising: partially additively manufacturing the object onto a removable platen within an additive manufacturing system; removing the platen with the object from a base of the additive manufacturing system; processing the object on the platen; inserting the platen with the object that has been processed into the additive manufacturing system or a different system; mating the platen with the object that has been processed to the base of the additive manufacturing system or a base of the different system using a registration feature; and manufacturing a layer onto the object that has been processed.

The method of the preceding paragraph can optionally include, additionally and/or alternatively, any one or more of the following features, configurations and/or additional components:

Manufacturing a layer onto the object that has been processed includes additively manufacturing the layer onto the object that has been processed.

The removable platen is a continuous platen for additively manufacturing components with variable length, and the base of the additive manufacturing system or the base of the different system is a drum roller.

The registration feature includes a plurality of holes in the platen and a plurality of pins on the drum roller that mate with the plurality of holes in the platen.

The removable platen is round and configured to rotate.

The registration feature includes a plurality of notches in the platen and a plurality of pins on the base of the additive manufacturing system or the base of the different system that mate with the plurality of notches in the platen.

The notches are not equally spaced from each other.

The registration feature includes a pin on the platen and hole in the base of the additive manufacturing system or the base of the different system that mates with the pin on the platen.

The pin and the hole have sides and corners.

The registration feature includes a plurality of pins on the platen and a plurality of holes in the base of the additive manufacturing system or the base of the different system that mate with the pins on the platen.

The registration feature includes a hole in the platen and a pin in the base of the additive manufacturing system or the base of the different system that mates with the hole in the platen.

The pin and the hole have sides and corners.

The registration feature includes a plurality of holes in the platen and a plurality of pins in the base of the additive manufacturing system or the base of the different system that mate with the plurality of holes in the platen.

Removing the platen with the object from a base of an additive manufacturing system includes disengaging the registration feature.

Processing the object on the platen includes additively manufacturing the object within a different additive manufacturing system, grinding the object, machining the object, laser etching the object, or chemically etching the object.

The different system includes a different additive manufacturing system at a different location.

Partially additively manufacturing the object includes beginning to additively manufacture the object at an identified point of origin, and wherein additively manufacturing a layer onto the object that has been processed includes starting the layer at a known distance from to the point of origin.

Partially additively manufacturing the object includes mating the platen to the base of the additive manufacturing system using the registration feature prior to beginning additive manufacturing.

The platen includes an identifying feature that identifies the object to the additive manufacturing system.

The identifying feature is located on a top surface of the platen.

A method of making an object, the method comprising: partially additively manufacturing the object onto a removable platen using an additive manufacturing system; removing the platen with the object from a base of the additive manufacturing system; inserting the platen with the object into a different system; mating the platen with the object to the base of the different system using a registration feature; and manufacturing a layer onto the object.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of making an object, the method comprising:
partially additively manufacturing the object (42) onto a removable platen (40) using an additive manufacturing system;
removing the platen (40) with the object (42) from a base (38) of the additive manufacturing system;
processing the object (42) on the platen (40);
inserting the platen (40) with the object (42) that has been processed into the additive manufacturing system or a different system;
mating the platen (40) with the object (42) that has been processed to the base (38) of the additive manufacturing system or a base (38) of the different system using a registration feature; and
manufacturing a layer onto the object (42) that has been processed.

2. The method of claim 1, wherein manufacturing a layer onto the object (42) that has been processed includes additively manufacturing the layer onto the object (42) that has been processed.

3. The method of claim 1, wherein the removable platen (40) is a continuous platen for additively manufacturing components with variable length, and the base of the additive manufacturing system or the base of the different system is a drum roller, and preferably wherein the registration feature includes a plurality of holes in the platen (40) and a plurality of pins on the drum roller that mate with the plurality of holes in the platen (40).

4. The method of claim 1, wherein the removable platen (40) is round and configured to rotate, and preferably wherein the registration feature includes a plurality of notches in the platen (40) and a plurality of pins on the base of the additive manufacturing system or the base of the different system that mate with the plurality of notches in the platen (40), and more preferably wherein the notches are not equally spaced from each other.

5. The method of claim 1, wherein the registration feature includes a pin on the platen (40) and hole in the base of the additive manufacturing system or the base of the different system that mates with the pin on the platen (40), and preferably wherein the pin and the hole have sides and corners.

6. The method of claim 1, wherein the registration feature includes a plurality of pins on the platen (40) and a plurality of holes in the base of the additive manufacturing system or the base of the different system that mate with the pins on the platen (40).

7. The method of claim 1, wherein the registration feature includes a hole in the platen (40) and a pin in the base of the additive manufacturing system or the base of the different system that mates with the hole in the platen (40), and preferably wherein the pin and the hole have sides and corners.

8. The method of claim 1, wherein the registration feature includes a plurality of holes in the platen (40) and a plurality of pins in the base of the additive manufacturing system or the base of the different system that mate with the plurality of holes in the platen (40).

9. The method of any preceding claim, wherein removing the platen (40) with the object (42) from a base of an additive manufacturing system includes disengaging the registration feature.

10. The method of any preceding claim, wherein processing the object (42) on the platen (40) includes additively manufacturing the object (42) within a different additive manufacturing system, grinding the object (42), machining the object (42), laser etching the object (42), or chemically etching the object (42).

11. The method of any preceding claim, wherein the different system includes a different additive manufacturing system at a different location.

12. The method of any preceding claim, wherein partially additively manufacturing the object (42) includes beginning to additively manufacture the object (42) at an identified point of origin, and wherein additively manufacturing a layer onto the object (42) that has been processed includes starting the layer at a known distance from to the point of origin.

13. The method of any of claims 1-11, wherein partially additively manufacturing the object (42) includes mating the platen (40) to the base of the additive manufacturing system using the registration feature prior to beginning additive manufacturing.

14. The method of any preceding claim, wherein the platen (40) includes an identifying feature that identifies the object (42) to the additive manufacturing system.

15. A method of making an object, the method comprising:
partially additively manufacturing the object (42) onto a removable platen (40) using an additive manufacturing system;
removing the platen (40) with the object (42) from a base of the additive manufacturing system;
inserting the platen (40) with the object (42) into a different system;
mating the platen (40) with the object (42) to the base of the different system using a registration feature; and
manufacturing a layer onto the object (42).
